Europäisches Patentamt

European Patent Office

Office européen des brevets

(11) Publication number: **0 160 344**
**B1**

# EUROPEAN PATENT SPECIFICATION

(45) Date of publication of patent specification: 22.06.88

(51) Int. Cl.⁴: **A 01 N 57/12**

(21) Application number: 85200654.3

(22) Date of filing: 24.04.85

(54) **Method of controlling soil pests using a phosphorothioate compound.**

(30) Priority: 30.04.84 US 605093

(43) Date of publication of application:
06.11.85 Bulletin 85/45

(45) Publication of the grant of the patent:
22.06.88 Bulletin 88/25

(84) Designated Contracting States:
AT BE CH DE FR GB IT LI LU NL SE

(56) References cited:
DD-A- 107 581
US-A-3 027 296
US-A-3 896 219

(73) Proprietor: SHELL INTERNATIONALE
RESEARCH MAATSCHAPPIJ B.V.
Carel van Bylandtlaan 30
NL-2596 HR Den Haag (NL)

(72) Inventor: Tieman, Charles Henry
2209 Fremont Street
Modesta California 95350 (US)

(74) Representative: Hunter, Keith Roger Ian et al
4 York Road
London SE1 7NA (GB)

Courier Press, Leamington Spa, England.

**Description**

The present invention relates to a method of controlling certain soil pests using a phosphorothioate compound.

US Patent No. 3,027,296 describes a number of halogenated phosphorus esters, including O,O-diethyl O-(1,2,2,2-tetrachloroethyl) phosphorothioate, as insecticides. This patent shows testing of certain of the halogenated phosphorus esters for insecticidal activity on houseflies, two-spotted mites and pea aphids. None of these tests involved application and use of these halogenated phosphorus compounds as soil insecticides in the soil habitat of insects or their larvae. The patent suggests that certain of the compounds have systemic insecticidal activity when applied to the soil in the vicinity of growing plants or directly to the plants.

The present invention provides a method of controlling insect larvae which inhabit the soil and feed on growing plants selected from rootworms, cutworms and wireworms, which comprises applying to the soil habitat of the larvae an insecticidally effective amount of O,O-diethyl O-(1,2,2,2-tetrachloroethyl) phosphorothioate.

O,O-Diethyl O-(1,2,2,2-tetrachloroethyl) phosphorothioate has unexpectedly high activity against certain insect larvae which inhabit the soil and feed on growing plants, and has persistent effectiveness over an extended period of time. Since the various kinds of soil-inhabiting larvae to be controlled do not manifest a problem at the same period of time, it is especially difficult to control these larvae effectively by one application of a larvicide before the plants, which might be damaged by the larvae, have even emerged. For example, the black cutworm is often a severe pest in seedling corn where usually two to three weeks following corn planting they infest the ground, near, yet beneath its surface, and cut the seedling off at ground level. By contrast, the corn rootworm infestation is a severe problem usually five to seven weeks after corn planting, and these worms infest the ground, up to six inches below the surface, chewing on the roots of the corn. In the case of wireworms, the infestation can occur throughout the growing season in which the wireworms infest the ground and attack the seed, the underground stem or the roots.

To control the larvae by application before the plant has emerged requires a material that is effective for an extended period of time and has a mode of action which is other than systemic.

The compound used in the method of the invention is useful for controlling a variety of insect larvae in the soil that are damaging to growing plants, including viable seeds. The effectiveness of this material as a soil insecticide for protecting growing plants is surprising in view of the generally low foliar activity of the material. The material of the invention is well suited for the control of *Diabrotica* species (rootworms), for example, *Diabrotica virgfera* LeConte, *Diabrotica longicornis,* and *Diabrotica undecimpunctata howardi* Barber, the western, northern and southern corn rootworm, respectively, and *Diabrotica undecimpunctata undecimpunctata* Mannerheim, particularly in their larval stages; *Agrotis, Crymodes, Amathes, Euxoa, Peridroma, Lacinpolia, Nephelodes, Actebia, Feltia, Loxagrotis* (cutworms); and *Agriotes, Limonius, Horistonotus, Ctenicera, Conoderus* (wireworms). Some of the better known larval species of the above are: *Agrotis ipsilon* (Hufnagel) (black cutworm), *Agriotes mancus* (wheat wireworm) and particularly the three *Diabrotica* species mentioned above.

The material for use in the invention can be conveniently formulated as granules or powders containing a solid diluent, impregnated with the material of the invention. Such formulations usually contain from 1 to 50% by weight of the material of the invention. More effective control will result when the formulation is physically lightly mixed with the topsoil. The mixing is concurrent with, preceded or followed by planting seed which germinate into plants.

The material of the invention can be applied as a drench, that is as a solution or dispersion of the material of the invention in a non-phytotoxic solvent or liquid diluent, suitably water. Such drenches can be prepared by diluting with water a concentrate containing the materials of the invention, an emulsifying agent, and preferably an organic solvent such as toluene.

The active compound is suitably applied to the soil at a rate of from 0.01 to 11 kg/ha, preferably 0.1 to 5 kg/ha, especially 0.5 to 5 kg/ha.

The O,O-diethyl O-(1,2,2,2-tetrachloroethyl) phosphorothioate used in the present invention can be prepared by various conventional methods of preparing phosphorus thioesters. In one such method chloral is treated with phosphorus pentachloride to give $CCl_3CHClOPCl_4$, which is treated with hydrogen sulfide to give the intermediate $CCl_3CHClOP(S)Cl_2$. This dichloridate is treated with ethanol to give the desired ester of the present invention. For this reaction with ethanol, an inert solvent can be present, but the reaction proceeds satisfactorily in the absence of a solvent.

The following Examples illustrate the invention.

Example 1 — Corn Rootworm Test

The test compound was dissolved in acetone solvent and thoroughly incorporated into dry soil. After venting traces of solvent, the soil moisture level was brought to 9% by adding water and thoroughly mixing.

60 g of moist soil was added to a wide-mouthed jar to ½ full. Two sweetcorn seeds, which had been surface sterilized in 0.2% sodium hypochlorite solution for 15 minutes and rinsed with water, were pressed into the soil near the perimeter of the jar. A small cavity was opened in the surface of the soil and 20

*Diabrotica undecimpunctata undecimpunctata* Mannerheim (western spotted cucumber beetle) eggs were placed in the well and immediately covered over with fine-seived damp vermiculite. The jar was then capped with a lid having two holes for ventilation. The jars were placed under lamps at 27°C.

After one week, the jar contents were examined for the presence of live larvae. Compounds showing control at 3 ppm or lower rate in the first week evaluated at subsequent weeks. Activity at 3 ppm indicates viable soil insecticidal activity.

Results of tests were expressed by the following ratings.

| Rating | Control Potential | Larval Count |
|--------|-------------------|--------------|
| 0 | Complete control | 0 |
| 1 | Excellent | >0 to 3 |
| 2 | Good | >3 to 6 |
| 3 | Fair | >6 to 10 |
| 4 | Poor | >10 |

Results of the tests using O,O-diethyl O-(1,2,2,2-tetrachloroethyl) phosphorothioate, and also three commercial compounds used for the control of soil insects and their larvae, carbofuran (2,3-dihydro-2,2-dimethyl-7-benzofuranyl methylcarbamate), chlorpyrifos (O,O-diethyl O-(3,5,6-trichloro-2-pyridinyl) phosphorothioate) and terbufos (S-(((1,1-dimethylethyl)thio)methyl) O,O-diethyl phosphorodithioate are given in Table I.

The results of the tests clearly show that the treatment according to the invention provides a higher degree of pest control than any of the commercial compounds.

**0 160 344**

TABLE I — Results of Corn Rootworm Test

| Compound | PPM | Rating at Weeks after Application | | | |
|---|---|---|---|---|---|
| | | 0 | 2 | 4 | 8 |
| According to the invention | 1.0 | 0 | 0 | 0 | 0 |
| | 0.3 | 0 | 0 | 0 | 0 |
| | 0.1 | 0 | 0 | 0 | 0 |
| | 0.05 | 0 | 1 | 1 | 1 |
| | 0.025 | 0 | 1 | 2 | 2 |
| | 0.01 | 1 | 3 | 3 | 4 |
| terbufos | 1.0 | 0 | 0 | 0 | 0 |
| | 0.3 | 0 | 1 | 0 | 0 |
| | 0.1 | 4 | 4 | 4 | 3 |
| carbofuran | 1.0 | 0 | 0 | 0 | 0 |
| | 0.3 | 0 | 1 | 1 | 1 |
| | 0.1 | 2 | 4 | — | — |
| chlorpyrifos | 1.0 | 0 | 0 | 0 | 0 |
| | 0.3 | 0 | 0 | 0 | 0 |
| | 0.1 | 1 | 1 | 1 | — |
| | 0.05 | 3 | 4 | 3 | — |

— means no test.

Example 2 — Black Cutworm Test

Air-dried field soil, screened to remove debris and clods, was used for this test. The soil contained approximately 1% residual moisture. Two hundred grams of soil was weighed and placed in a bottle. Screening rates for the tests compounds were 2 ppm and 20 ppm, made up in 18 ml of water containing 0.05% of surfactant ATLOX 1045A (Trade mark). This 18 ml solution was poured into the 200 grams of soil, resulting in a 10% soil moisture content, and the soil was vigorously shaken to mix the compound and soil. Two 60 g sub-samples were weighed from the original 200 g sample and placed in wide-mouth jars. A small cavity was made in the surface of the soil and a 10 mm square plug of artificial diet was placed in the well. Five holes were then pressed into the soil surrounding the diet, and a single third instar Black Cutworm larvae [*Agrotis ipsilon* (Hufnagel)] was placed into each hole and covered with soil. The jars were fitted with lids, having two holes, and held for 48 hours, at which time results were observed and recorded. Chlorpyrifos, which is the principal material registered for cutworm control at planting time, was included in the test. Results are given in Table II, and show that the invention represents a considerable improvement over the commercial treatment.

4

TABLE II — Results of Black Cutworm Test

| Compound | PPM | % Mortality |
|---|---|---|
| According to the invention | 10 | 100 |
| | 2 | 100 |
| | 1 | 100 |
| | 0.5 | 100 |
| | 0.25 | 20 |
| | 0.1 | 0 |
| Chlorpyrifos | 20 | 100 |
| | 2 | 100 |
| | 1 | 40 |
| | 0.5 | 0 |

**Claims**

1. A method for controlling insect larvae which inhabit the soil and feed on growing plants selected from rootworms, cutworms and wireworms which comprises applying to the soil habitat of the larvae an insecticidally effective amount of O,O-diethyl O-(1,2,2,2-tetrachloroethyl) phosphorothioate.

2. A method according to claim 1 wherein the rootworms are of the *Diabrotica, Agrotis* or *Agriotes* species.

3. A method according to either claim 1 or claim 2, wherein the phosphorothioate is applied by physically mixing with the topsoil.

4. A method according to any one of claims 1 to 3, wherein the phosphorothioate is applied to the soil habitat in an amount of from 0.01 to 11 kg/$10^4$ m$^2$ (ha).

5. A method according to claim 4 wherein the phosphorothioate is applied to the soil habitat in an amount of from 0.1 to 5 kg/$10^4$ m$^2$ (ha).

**Patentansprüche**

1. Verfahren zur Bekämpfung von bodenbewohnenden und sich von wachsenden Pflanzen ernährenden Insektenlarven, ausgewählt unter Blattkäferlarven, Eulenlarven und Schnellkäferlarven, welches ein Aufbringen einer insektizid wirksamen Menge von O,O-Diethyl-O-(1,2,2,2-tetrachlorethyl)-phophothioat auf den Aufenthaltsort der Larven im Boden umfaßt.

2. Verfahren nach Anspruch 1, worin die Larven den Diabrotica-, Agrotis- oder Agriotes-Arten angehören.

3. Verfahren nach Anspruch 1 oder 2, worin das Phosphorthioat durch physikalisches Vermischen mit der Bodenoberschict aufgebracht wird.

4. Verfahren nach einem der Ansprüche 1 bis 3, worin das Phosphorthioat in einer Menge von 0,01 bis 11 kg/$10^4$ m$^2$ (ha) auf den Aufenthaltsort im Boden aufgebracht wird.

5. Verfahren nach Anspruch 4, worin das Phosphorthioat in einer Menge von 0,1 bis 5 kg/$10^4$ m$^2$ (ha) auf den Aufenthaltsort im Boden aufgebracht wird.

**Revendications**

1. Un procédé pour lutter contre des larves d'insectes qui habitent dans la terre et se nourrissent de plantes en cours de croissance choisies parmi les chenilles des racines, les vers gris et les vers fil de fer, qui comprend l'application à la terre servant d'habitat aux larves d'une quantité efficace du point de vue insecticide d'O,O-diéthyl O-(1,2,2,2-tétrachloroéthyl) phosphorothioate.

2. Un procédé selon la revendication 1, dans lequel les chenilles des racines sont des espèces *Diabrotica, Agrotis* ou *Agriotes.*

3. Un procédé selon la revendication 1 ou la revendication 2, dans lequel on applique le phosphorothioate en le mélangeant physiquement avec la terre de surface.

4. Un procédé selon l'une quelconque des revendications 1 à 3, dans lequel le phosphorothioate est appliqué à la terre servant d'habitat à raison de 0,01 à 11 kg/10$^4$ m$^2$ (ha).

5. Un procédé selon la revendication 4, dans lequel le phosphorothioate est appliqué à la terre servant d'habitat à raison de 0,1 à 5 kg/10$^4$ m$^2$ (ha).